# FASCICULE DE BREVET EUROPEEN

(11) **EP 0 955 198 B1**
(45) Date de publication et mention de la délivrance du brevet: **11.09.2002**
(21) Numéro de dépôt: 99400343.2
(22) Date de dépôt: 12.02.1999
(51) Int. Cl.: B60J 10/04, B60J 10/00

(54) **Profilé comportant au moins une lèvre en un matériau déformable élastiquement, destinée à entrer en contact avec une vitre mobile**
Profil bestehend aus mindestens einer elastischen, verformbaren Lippe für den Kontakt mit einer bewegbaren Fensterscheibe
Profile consisting of at least one elastically deformable lip for contact with a movable window pane

(30) Priorité: 07.05.1998 FR 9805811
(43) Date de publication de la demande: 10.11.1999
(73) Titulaire: BTR SEALING SYSTEMS FRANCE, 92000 Nanterre (FR)
(72) Inventeur: Dron, Bernard, 92800 Puteaux (FR)
(74) Mandataire: Jolly, Jean-Pierre

(56) Documents cités:
- EP-A- 0 021 989
- EP-A- 0 343 046
- EP-A- 0 466 531
- FR-A- 2 233 485
- US-A- 5 010 691

## Description

La présente invention concerne un profilé comportant au moins une lèvre en un matériau déformable élastiquement, destinée à entrer en contact avec une vitre mobile, notamment d'une porte d'un véhicule automobile.

De tels profilés sont généralement de deux types, à savoir :
- les coulisses, qui sont rendues solidaires de l'encadrement d'une vitre mobile et dont une partie à section en U guide la vitre dans ses déplacements et la reçoit de façon étanche en position de fermeture ;
- les lécheurs, dont une lèvre est appliquée contre la vitre mobile, transversalement à sa direction de déplacement, pour assurer l'étanchéité.

Pour faciliter le coulissement des vitres mobiles au contact des lèvres de ces profilés, celles-ci comportaient antérieurement des fibres floquées à leur surface.

Cette technique de flocage est toujours employée, mais les fibres laissent passer l'air et l'humidité, et l'on a donc proposé, plus récemment, d'enduire les lèvres d'un matériau rigide et dur (dureté Shore D supérieure à 40), servant d'agent glissant. Ce matériau se présente généralement sous la forme d'un vernis, qui est appliqué sur la lèvre sous forme d'une couche d'une faible épaisseur, dans la zone destinée à venir en contact avec la vitre mobile.

A l'usage, cet agent glissant, bien qu'utilisé en couche mince, se révèle trop rigide et ce manque de souplesse a pour effet que la lèvre ne vient en contact avec la vitre mobile que par une surface réduite, par exemple, par son extrémité. Du fait d'une trop forte contrainte localisée, l'agent glissant peut également avoir tendance à se désolidariser du matériau constituant la lèvre (élastomère ou matière thermoplastique).

Pour remédier à ces inconvénients, on a donc proposé, par exemple, pour un agent glissant thermoplastique, d'incorporer un agent de compatibilité dans le matériau de la lèvre, mais cette addition est coûteuse et son efficacité médiocre. De plus, la zone de contact avec la vitre reste très limitée.

On a enfin proposé d'éviter les problèmes posés par la rigidité de l'agent glissant, en divisant celui-ci, à la surface de la lèvre appelée à être tournée vers là vitre mobile, en une pluralité d'éléments distincts, disposés en des positions contiguës et présentant des dimensions relativement faibles dans la direction de flexion de la lèvre, de manière à ne pas s'opposer à la déformation élastique de celle-ci et à ne pas se fragmenter sous sa sollicitation (voir, par exemple, EP 0 343 046 A et EP 0 349 389 A).

Cette technique présente toutefois l'inconvénient que, lorsque la tranche de la vitre mobile qui vient au contact de la lèvre souple présente des irrégularités de surface formant des aspérités, celles-ci peuvent s'engager entre les éléments distincts d'agent glissant et s'accrocher à ceux-ci, avec pour conséquence un risque d'arrachement et une usure prématurée de ces éléments et un mauvais coulissement de la vitre mobile.

En étudiant ce problème, la Demanderesse a établi qu'il est possible de remédier à cet inconvénient non plus en divisant la couche d'agent glissant sur la lèvre souple en éléments distincts contigus, séparés par des intervalles, mais en appliquant sur la lèvre souple une mince couche continue d'agent glissant et en pratiquant sur la face de la lèvre souple non en contact avec cet agent glissant une série de stries parallèles qui entaillent cette lèvre.

L'invention a par conséquent pour objet un profilé comportant au moins une lèvre extrudée en un matériau déformable élastiquement, destinée à entrer en contact avec une vitre mobile, par une surface revêtue d'une mince couche continue d'un agent glissant, ce profilé étant caractérisé en ce qu'une partie au moins de la face de la lèvre non en contact avec l'agent glissant est entaillée d'une pluralité de stries parallèles, disposées de façon telle qu'en cours d'utilisation, elles soient parallèles à la vitre mobile et perpendiculaires à la direction de déplacement de celle-ci.

De façon connue en soi, la lèvre aura une dureté comprise entre 40 et 90 Shore A, tandis que le matériau glissant aura une dureté supérieure à 40 Shore D.

Le corps de la lèvre et la couche d'agent glissant pourront être réalisés par coextrusion, la ou les stries de la face de la lèvre non en contact avec l'agent glissant pouvant être venues d'extrusion ou être pratiquées postérieurement à l'extrusion.

Le corps de la lèvre pourra aussi être réalisé par extrusion et la couche d'agent glissant être appliquée ultérieurement sur ce corps, avant de ménager une ou des stries sur la face non destinée à venir au contact de l'agent glissant ou après avoir pratiqué cette ou ces stries.

L'épaisseur de la couche d'agent glissant sera comprise entre 20 et 100 microns, dans la zone destinée à venir au contact de la vitre mobile.

La ou les stries pourront avoir avantageusement une section transversale en V, avec la pointe du V dirigée vers la couche d'agent glissant et légèrement arrondie, mais cette forme n'est pas limitative.

La profondeur des stries dépendra naturellement de l'épaisseur de la lèvre et visera simplement à faciliter la flexion de celle-ci. Elle sera généralement comprise entre 0,6 et 2 mm.

L'agent glissant pourra être constitué de façon connue de polyuréthane, de caoutchouc E.P.D.M. ou de mélanges polyéthylène-polypropylène, tous modifiés avec des additifs appropriés. La nature de l'agent glissant n'est pas limitative.

La face de l'agent glissant destinée à venir au contact de la vitre mobile sera avantageusement légèrement grainée.

Avec les lèvres conformes à l'invention, il est possible d'obtenir une zone de contact avec la lèvre mobile largement supérieure à celles de la technique antérieure, sans craindre une fissuration de l'agent glissant et une désolidarisation de celui-ci et de la lèvre. On obtient alors un bien meilleur effet d'insonorisation au niveau de la lèvre que dans la technique antérieure et une réduction des bruits de crissement dus au mouvement de la vitre.

Comme il a été indiqué ci-dessus, l'invention s'applique aussi bien aux profilés dits "coulisses", qu'à ceux dits "lécheurs", utilisés notamment dans l'industrie automobile.

Diverses formes de réalisation de tels profilés vont être décrites ci-après plus en détail, à titre d'exemples non limitatifs, en référence aux dessins annexés. Sur ces dessins :
La figure 1 est une vue schématique, en coupe transversale, d'une coulisse comportant des lèvres conformes à l'invention, pour vitre mobile d'une porte d'automobile ;
La figure 2 est une vue à plus grande échelle d'une lèvre de ce type de profilé au contact de la vitre ;
La figure 3 est une coupe transversale d'un lécheur intérieur pour porte d'automobile à vitre coulissante, ce lécheur comportant une lèvre conforme à l'invention.

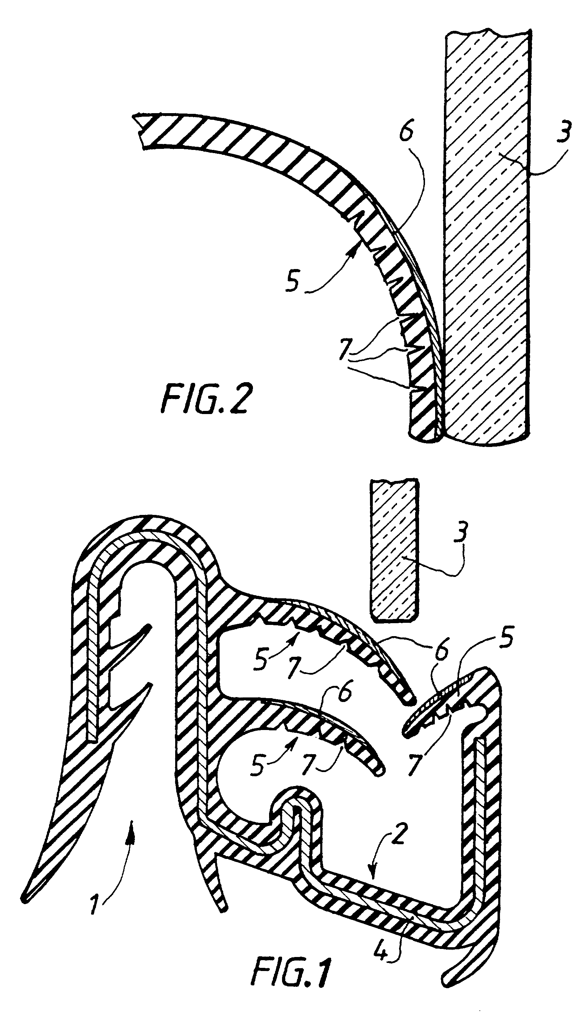

Le profilé représenté sur la figure 1 comprend, de façon connue en soi, une première partie 1 formant pince, à section en U, destinée à coiffer un bord saillant d'un encadrement de vitre mobile, et une seconde partie 2, dite coulisse, à section en U inversée par rapport à la précédente, destinée à guider dans ses mouvements une vitre mobile 3 et à assurer l'étanchéité en position de fermeture de celle-ci, lorsqu'elle vient en butée contre la base du U de la partie 2.

Les parties 1 et 2 sont attenantes, l'une des branches des deux U étant commune à chacune des deux parties. Celles-ci comportent une armature métallique commune 4, qui est gainée d'un élastomère ou d'un plastomère, par exemple de caoutchouc E.P.D.M.. Ce profilé est réalisé par extrusion de l'élastomère sur l'armature.

La coulisse 2 comporte des lèvres 5, qui peuvent ou non être en le même matériau que celui de la coulisse et qui sont au contact de la face externe et de la face interne de la vitre 3, en cours ou en fin de déplacement de celle-ci.

Comme on le voit plus clairement sur la figure 2, une partie au moins de la surface de ces lèvres, appelée à venir au contact de la vitre 3, comporte un revêtement constitué par une couche continue 6 d'un agent glissant. Cet agent glissant est par exemple un vernis rigide et dur (dureté supérieure à 40 Shore D).

Conformément à l'invention, afin de faciliter la flexion de la lèvre 5, sans provoquer la fragmentation de la couche 6 d'agent glissant, la face de la lèvre 5 non contiguë à l'agent glissant est entaillée de stries 7, parallèles entre elles et à la vitre 3 et perpendiculaires à la direction de déplacement de cette dernière.

Les stries 7 sont ici venues d'extrusion avec la lèvre 5, tandis que la couche 6 d'agent glissant peut être coextrudée avec celle-ci ou être appliquée postérieurement à l'extrusion, sous la forme d'une couche homogène.

Ces stries 7 ont en coupe transversale un profil en V, dont la pointe est arrondie et tournée vers l'agent glissant, et leur profondeur, qui dépend de l'épaisseur de la lèvre considérée, est généralement comprise entre 0,9 et 1,3 millimètre. Les stries 7 pourraient naturellement avoir un profil différent.

En répartissant de façon appropriée les stries 7 sur la face de la lèvre non en contact avec l'agent glissant, la combinaison de ces stries 7 et d'une mince couche continue 6 d'agent glissant permet de ménager une zone de contact entre la lèvre 5 revêtue de l'agent glissant et la vitre 3 bien supérieure à celles de la technique antérieure, sans avoir à redouter une fissuration de l'agent glissant, avec pour effet une excellente insonorisation du véhicule au niveau de la lèvre. La couche 6 étant continue, on ne risque pas, par ailleurs, que les aspérités que peuvent présenter les bords de la tranche de la vitre s'engagent entre des éléments contigus d'agent glissant et aient tendance à les décoller de la lèvre.

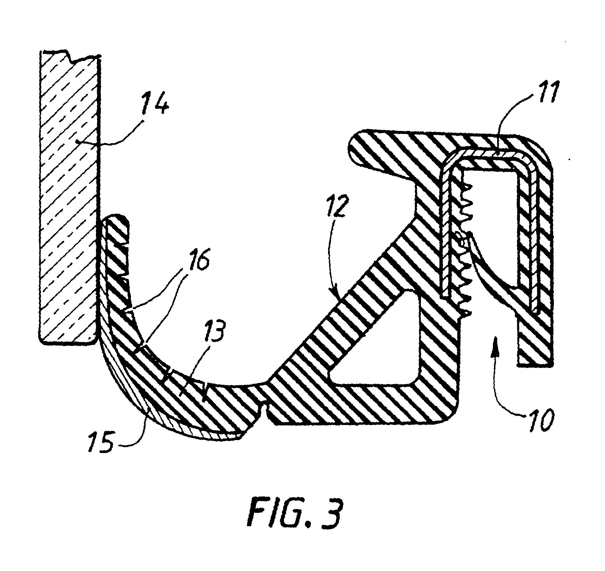

La figure 3 représente un profilé en élastomère ou plastomère extrudé du type dit lécheur, destiné à équiper une porte d'automobile à vitre coulissante, à l'intérieur du véhicule. Ce profilé comporte, de façon connue, une partie 10 formant pince à section en U, à armature métallique 11 noyée dans l'élastomère, destinée à coiffer en le pinçant un bord saillant de l'encadrement de vitre, un corps 12 attenant à la partie 10 et une lèvre 13, attenante au corps 12 et léchant la face interne de la vitre 14. La face de la lèvre 13 tournée vers la vitre 14 comporte, sur une partie au moins de sa surface destinée à venir au contact de la vitre, un revêtement constitué par une mince couche continue 15 d'un agent glissant.

Conformément à l'invention et comme décrit précédemment, la face de la lèvre 13 non tournée vers la vitre 14 est entaillée de stries 16 à section en V, parallèles entre elles et à la vitre 14, la pointe du V étant arrondie et tournée vers la vitre.

L'invention s'applique, bien entendu, aussi bien à un lécheur extérieur pour porte d'automobile à vitre coulissante et, dans toutes ses applications, elle apporte donc un moyen particulièrement simple pour remédier aux problèmes posés par les revêtements en un agent glissant dur, appliqués sur une surface d'une lèvre en un matériau déformable élastiquement et appelés à venir au contact d'une vitre coulissante.

## Revendications

1. Profilé comportant au moins une lèvre extrudée (5, 13) en un matériau déformable élastiquement, destinée à entrer en contact avec une vitre mobile (3, 14), par une surface revêtue d'une mince couche continue (6, 15) d'un agent glissant, ce profilé étant **caractérisé en ce qu'**une partie au moins de la face de la lèvre (5, 13) non en contact avec l'agent glissant est entaillée d'une pluralité de stries parallèles (7, 16), disposées de façon telle qu'en cours d'utilisation, elles soient parallèles à la vitre mobile (3, 14) et perpendiculaires à la direction de déplacement de celle-ci.

2. Profilé selon la revendication 1, **caractérisé en ce que** la lèvre (5, 13) est en un élastomère ou plastomère de dureté comprise entre 40 et 90 Shore A, tandis que le matériau glissant a une dureté supérieure à 40 Shore D.

3. Profilé selon l'une des revendications 1 et 2, **caractérisé en ce que** la ou les stries (7, 16) de la lèvre (5, 13) ont une section transversale en forme de V dont la pointe est tournée vers le revêtement (6, 15) d'agent glissant et est de préférence arrondie.

4. Profilé selon l'une des revendications 1 à 3, **caractérisé en ce que** la couche d'agent glissant a une épaisseur comprise entre 20 et 100 microns, dans la zone destinée à venir au contact de la vitre mobile (3, 14), tandis que la ou les stries (7, 16) de la lèvre (5, 13) ont une profondeur comprise entre 0,6 et 2 mm.

5. Profilé selon l'une des revendications 1 à 4, **caractérisé en ce que** l'agent glissant est constitué de polyuréthane, de caoutchouc E.P.D.M. ou de mélanges polyéthylène-polypropylène, tous modifiés avec des additifs appropriés.

6. Profilé selon l'une des revendications 1 à 5, **caractérisé en ce qu'**au moins la partie de la surface de l'agent glissant destinée à venir au contact de la vitre mobile présente un grainage.

7. Profilé selon l'une des revendications 1 à 6, du type coulisse ou lécheur intérieur ou extérieur pour porte d'un véhicule automobile à vitre coulissante.

## Patentansprüche

1. Profil mit mindestens einer extrudierten Lippe (5, 13) aus einem elastisch verformbaren Material zum Kontakt mit einer beweglichen Glasscheibe (3, 14) über eine mit einer durchgehenden dünnen Beschichtung (6, 15) aus einem Gleitmittel versehene Oberfläche,
**dadurch gekennzeichnet,**
**dass** mindestens die Fläche der Lippe (5, 13), die nicht mit dem Gleitmittel in Kontakt kommt, eine Vielzahl paralleler Riefen (7, 16) umfasst, die so angeordnet sind, dass sie bei Betätigung parallel zur beweglichen Glasscheibe (3, 14) und senkrecht zur Verstellrichtung derselben zu liegen kommen.

2. Profil nach Anspruch 1, **dadurch gekennzeichnet, dass** die Lippe (5, 13) aus einem Elastomer oder Plastomer mit einer Härte zwischen 40 und 90 Shore A besteht, während das Gleitmittel eine Härte von über 40 Shore D besitzt.

3. Profil nach irgendeinem der Ansprüche 1 und 2, **dadurch gekennzeichnet, dass** die Riefen (7, 16) der Lippe (5, 13) einen V-förmigen Querschnitt aufweisen, dessen Spitze der aus Gleitmittel bestehenden Beschichtung (6, 15) zugewandt und bevorzugt abgerundet ist.

4. Profil nach irgendeinem der Ansprüche 1 bis 3, **dadurch gekennzeichnet, dass** die Gleitmittelbeschichtung in dem zum Kontakt mit der beweglichen Glasscheibe (3, 14) vorgesehenen Bereich eine Dicke zwischen 20 und 100 Mikron hat, während die Tiefe der Riefe(n) (7, 16) der Lippe (5, 13) zwischen 0.6 und 2 mm beträgt.

5. Profil nach irgendeinem der Ansprüche 1 bis 4, **dadurch gekennzeichnet, dass** das Gleitmittel aus Polyurethan, Ethylen-Propylen-Dien-Kautschuk oder aus Polyethylen-Polypropylen-Gemischen besteht, die jeweils durch geeignete Zusätze modifiziert sind.

6. Profil nach irgendeinem der Ansprüche 1 bis 5, **dadurch gekennzeichnet, dass** mindestens der zum Kontakt mit der beweglichen Glasscheibe vorgesehene Teil der Gleitmitteloberfläche eine Körnung aufweist.

7. Profil nach irgendeinem der Ansprüche 1 bis 6, **dadurch gekennzeichnet, dass** es sich um eine innere oder äussere Gleitführung für die mit verstellbarer Glasscheibe versehene Tür eines Kraftfahrzeugs handelt.

## Claims

1. Profile comprising at least one extruded lip (5, 13) made of an elastically deformable material and intended to come into contact with a moving window (3, 14), by a surface coated with a continuous thin layer (6, 15) of a sliding agent, this profile being **characterised in that** at least a portion of the face of the lip (5, 13) not in contact with the sliding agent is notched by a plurality of parallel grooves (7, 16) disposed in such a way that, during use, they are parallel to the moving window (3, 14) and perpendicular to the direction of travel thereof.

2. Profile according to claim 1, **characterised in that** the lip (5, 13) is made of an elastomer or plastomer having a Shore A hardness between 40 and 90 whereas the sliding material has a Shore D hardness higher than 40.

3. Profile according to either of claims 1 and 2, **characterised in that** the groove or grooves (7, 16) of the lip (5, 13) have a V-shaped cross-section of which the point is turned toward the coating (6, 15) of sliding agent and is preferably rounded.

4. Profile according to any of claims 1 to 3, **characterised in that** the layer of sliding agent has a thickness of between 20 and 100 microns in the zone intended to come into contact with the moving window (3, 14), whereas the groove or grooves (7, 16) of the lip (5, 13) have a depth between 0.6 and 2 mm.

5. Profile according to any of claims 1 to 4, **characterised in that** the sliding agent consists of polyurethane, EPDM rubber or polyethylene/polypropylene mixtures, all modified with appropriate additives.

6. Profile according to any of claims 1 to 5, **characterised in that** at least the portion of the surface of the sliding agent intended to come into contact with the moving window has graining.

7. Profile according to any of claims 1 to 6, of the internal or external track or feeder type for an automotive vehicle door comprising a sliding window.
